# EUROPÄISCHE PATENTSCHRIFT

(11) **EP 3 559 324 B1**
(45) Veröffentlichungstag und Bekanntmachung des Hinweises auf die Patenterteilung: **10.06.2020**
(21) Anmeldenummer: 17835673.9
(22) Anmeldetag: 20.12.2017
(51) Int. Cl.: D04B 21/10

(54) **NETZ MIT UNTERSTÜTZUNGSFADEN**
NET HAVING A SUPPORT THREAD
FILET COMPRENANT DES FILS DE SOUTIEN

(30) Priorität: 23.12.2016 DE 102016125601
(43) Veröffentlichungstag der Anmeldung: 30.10.2019
(73) Patentinhaber: Karatzis S.A. Industrial & Hotelier Enterprises, 71601 Heraklion Kreta (GR)
(72) Erfinder: KARATZIS, Antonios, 71601 Heraklion Kreta (GR)
(74) Vertreter: Karakatsanis, Georgios
(86) Internationale Anmeldenummer: PCT/EP2017/083905
(87) Internationale Veröffentlichungsnummer: WO 2018/115175

(56) Entgegenhaltungen:
- WO-A1-2004/020721
- AT-U1- 14 185
- CH-A- 507 405
- DE-A1- 4 301 232
- DE-U1- 20 008 520
- DE-U1-202016 105 663
- JP-A- S5 870 753

## Beschreibung

Die Erfindung betrifft ein Netz, beispielsweise ein Kunststoffnetz und insbesondere ein sogenanntes Raschelnetz.

Netze bzw. Raschelnetze sind bekannt. Raschelnetze dienen vielfältigen Einsatzzwecken und werden aus einem Kunststofffaden mit Hilfe geeigneter Vorrichtungen (Raschelmaschinen) gewirkt, indem über die gesamte Maschinenbreite jeweilige Kunststofffäden mit Hilfe von speziellen Nadeln zu Fäden verschlungen werden.

Ein Beispiel für ein derartiges Raschelnetz ist aus der EP 1 851 385 A1 bekannt, die die Nutzung eines Raschelnetzes beispielhaft für einen Baustellenzaun zeigt. Je nach Stärke der verwendeten Fäden sind unterschiedliche Anwendungen möglich. So können zum Beispiel auch sehr leichte Netze hergestellt werden, die zum Beispiel zum Einwickeln von losen Gütern wie beispielsweise Heuballen dienen.

Weitere Netze sind aus AT 14 185 U1, DE 200 08 520 U1, WO 2004/020721 A1, DE 43 01 232 A1, CH 507 405 A, JP S58 70753 A sowie DE 2016 105663 U1 bekannt.

Bei der Herstellung derartig leichter Netze kommt es einerseits darauf an, dass die Netze ein möglichst geringes Gewicht aufweisen, was einhergeht mit entsprechend niedrigem Materialaufwand und damit niedrigen Materialkosten. Andererseits müssen die Netze aber auch eine ausreichende Festigkeit erreichen, damit sie ihre Funktion erfüllen können. Es ist somit nicht ohne weiteres möglich, durch Einsatz von dünneren Kunststofffäden bzw. Kunststofffäden mit geringerem Querschnitt Material zu sparen, weil die dünnen Fäden dann keine ausreichende Festigkeit mehr besitzen.

Der Erfindung liegt die Aufgabe zugrunde, ein Netz anzugeben, mit dem eine Verminderung des Materialeinsatzes und damit des Gewichts möglich ist, ohne Festigkeitseinbußen zu erleiden.

Die Aufgabe wird erfindungsgemäß durch ein Netz mit den Merkmalen von Anspruch 1 gelöst. Vorteilhafte Ausgestaltungen sind Gegenstand der abhängigen Ansprüche.

Erfindungsgemäß wird ein Netz vorgeschlagen, mit mehreren sich in Längsrichtung parallel zueinander erstreckenden Ketten, mehreren Schussfäden, von denen jeweils einer zwischen zwei benachbarten Ketten hin- und herläuft und die benachbarten Ketten miteinander verbindet, und mit einem ersten Unterstützungsfaden, der entlang einer Kette verläuft und diese an mehreren Stellen durchstößt, und einem zweiten Unterstützungsfaden, der entlang der Kette verläuft, wobei der zweite Unterstützungsfaden sich entlang der Kette in Längsrichtung erstreckt, und wobei der zweite Unterstützungsfaden abschnittsweise Augen bildet, in denen er entgegen der Längsrichtung verläuft.

Die Stellen, an denen der Unterstützungsfaden die Kette durchstößt, können insbesondere die Kettenglieder bzw. Maschen sein, die jeweils eine etwa ringförmige oder auch langgezogene Öffnung bilden, durch die der Unterstützungsfaden hindurchgefädelt wird.

Der zusätzliche Unterstützungsfaden erhöht die Festigkeit des Netzes deutlich und ermöglich es, die Stärke (Dicke, Breite) der Fäden, aus denen die Ketten und Schussfäden hergestellt sind, zu reduzieren.

Bei dem Netz kann sich der erste Unterstützungsfaden entlang der Kette in Längsrichtung erstrecken, wobei der erste Unterstützungsfaden abschnittsweise Augen bildet, in denen er entgegen der Längsrichtung verläuft. Die Augen können in Form von Schleifen ausgebildet sein. Somit erstreckt sich der Unterstützungsfaden in Längsrichtung (Maschinenrichtung) und bildet in regelmäßigen oder auch unregelmäßigen Abständen Schlingen bzw. Schleifen (Augen).

Bei dem Netz können bei einer Kette mehrere Unterstützungsfäden, z.B. bis 5 Unterstützungsfäden, eingefädelt sein, die sich entlang der Kette erstrecken und diese an mehreren Stellen durchstoßen.

Da das Netz aus mehreren parallel zueinander verlaufenden Ketten besteht, ist es möglich, dass an einem Teil der Ketten oder auch an sämtlichen Ketten des Netzes wenigstens ein Unterstützungsfaden oder auch mehrere Unterstützungsfäden verlaufen. Je mehr Unterstützungsfäden vorhanden sind, desto größer ist die Festigkeit.

Durch das erfindungsgemäße Vorsehen eines zweiten Unterstützungsfadens zusätzlich zu dem ersten Unterstützungsfaden wird die Festigkeit weiter erhöht.

Die Schlingen können wie bei dem ersten Unterstützungsfaden in Form von Schleifen ausgebildet sein. Somit erstreckt sich auch der zweite Unterstützungsfaden in Längsrichtung (Maschinenrichtung) und bildet in regelmäßigen oder auch unregelmäßigen Abständen Schlingen bzw. Schleifen (Augen).

Der zweite Unterstützungsfaden kann zumindest teilweise parallel zum ersten Unterstützungsfaden verlaufen.

Der erste Unterstützungsfaden wie auch die weiteren Unterstützungsfäden können derart verlaufen, dass jeder Unterstützungsfaden jede Masche der Kette durchstößt, also durch jede Masche der Ketten bzw. jedes Kettenglied gefädelt ist.

Der Abstand zwischen zwei benachbarten Ketten kann 20 mm bis 80 mm betragen.

Der Unterstützungsfaden kann ein Kunststofffilmfaden sein.

Die Dicke des Unterstützungsfadens kann 0,5 mm bis 4 mm betragen.

Der Schussfaden kann in der Art die ihm zugeordneten Ketten verbinden, dass sein Verlauf ein Zick-Zack-Muster ausbildet.

Der Schussfaden kann nach Durchstoßen einer zugehörigen Kette streckenweise parallel zu dieser Kette verlaufen.

Weitere Vorteile und Merkmale der Erfindung werden nachfolgend anhand von Beispielen unter Zuhilfenahme der begleitenden Figuren näher erläutert. Es zeigen:
- Fig. 1A: ein Netz mit einem ersten Unterstützungsfaden;
- Fig. 1B: ein Netz mit einem ersten und einem zweiten Unterstützungsfaden;
- Fig. 2A: einen Ausschnitt eines Netzes mit einem Unterstützungsfaden;
- Fig. 2B: einen Ausschnitt eines Netzes mit zwei Unterstützungsfäden;
- Fig. 3A: einen Teil einer Kette mit einem Unterstützungsfaden;
- Fig. 3B: einen Teil einer Kette mit einem Unterstützungsfaden, die einen Bestandteil eines Netzes gemäß einem Ausführungsbeispiel bildet;
- Fig. 3C: einen Teil einer Kette mit einem Unterstützungsfaden; und
- Fig. 4: ein Beispiel eines zu einer Rolle aufgerollten Netzes. Die Beschreibung der nachfolgenden Ausführungsbeispiele ist nicht einschränkend.

Zur näheren Erläuterung von Bestandteilen des hergestellten Netzes werden im Folgenden die nachstehenden Bezeichnungen verwendet:
Zur näheren Erläuterung werden im Folgenden die nachstehenden Bezeichnungen verwendet:
**Netz bzw. Gewebe:** dünne Bänder, die beispielsweise aus Polyolefinen wie beispielsweise LLDPE (lineares Polyethylen mit geringer Dichte), LDPE (Polyethylen mit geringer Dichte), HDPE (Polyethylen mit hoher Dichte), PVC (Polyvinylchlorid), EVA (Ethylenvinylacetat) oder aus einem ähnlichen Kunststoff hergestellt sind bzw. bestehen, werden zu einem Netz bzw. Gewebe verarbeitet.

**Fäden:** Die dünnen Bänder, aus denen das Netz aufgebaut ist.

**Kettfäden:** Die zu einem Schlingenverbund aneinander gereihten Maschen in Fließrichtung des Netzes.

**Schüsse:** Die Fäden mit einer Zick-Zack-Verflechtung, die die Kettfäden zu einem Netz verbinden.

**MD (Maschinenrichtung):** Die Fließrichtung des Netzes bei der Herstellung bzw. beim Abwickeln, auch als Längsrichtung des Netzes bezeichnet.

**TD (Transversalrichtung):** Die Richtung senkrecht zur Fließrichtung bzw. Maschinenrichtung.

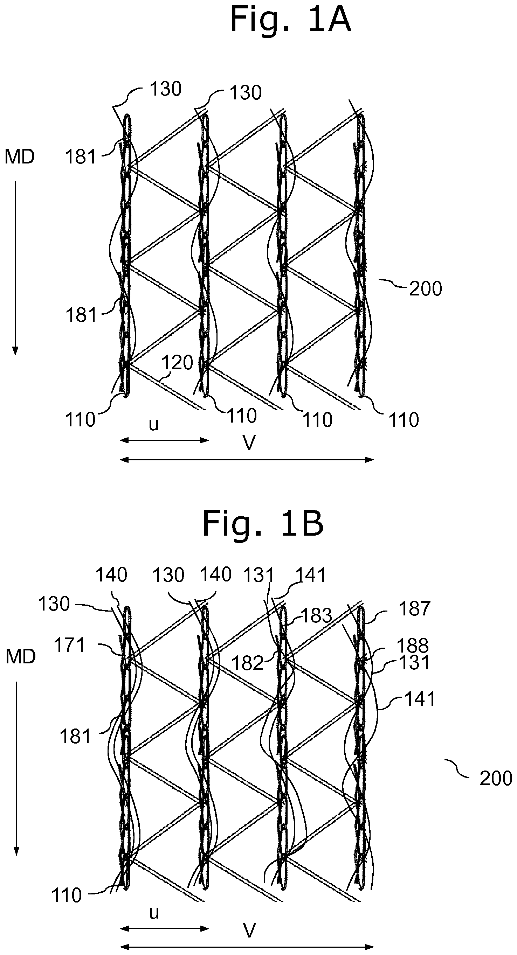

Fig. 1A zeigt ein Netz mit einem ersten Unterstützungsfaden.

Wie im Folgenden diskutiert werden wird, weist das in Fig. 1A gezeigte Netz 200 mehrere sich in Längsrichtung bzw. Maschinenrichtung MD parallel zueinander erstreckende Ketten 110 sowie mehrere Schussfäden 120 auf, von denen jeweils einer zwischen zwei benachbarten Ketten 110 hin- und herläuft und die benachbarten Ketten miteinander verbindet. Weiterhin enthält das Netz 200 einen ersten Unterstützungsfaden 130, der entlang einer Kette 110 verläuft und diese an mehreren Stellen 181 durchstößt.

In Fig. 1A ist gezeigt, dass die Stellen 181 einen gewissen Abstand aufweisen und der Unterstützungsfaden 130 nur etwa jedes dritte Kettenglied bzw. jede dritte Masche der Kette 110 an einer entsprechenden Stelle 181 durchstößt. Es ist jedoch bei einer nicht gezeigten Variant möglich, dass der Unterstützungsfaden 130 durch jede Masche bzw. jedes Kettenglied hindurchgefädelt wird, also die Stellen 181 mit den jeweiligen Öffnungen der Kettenglieder zusammenfallen.

Das in Fig. 1A gezeigte Netz 200 kann ein sogenanntes Raschelnetz sein, das Ketten 110 aufweist, die aus Fäden gewirkt sind. Die Fäden können beispielsweise Kunststofffäden sein. Jede einzelne Kette 110 wird dabei durch das Verschlingen eines oder mehrerer Fäden hergestellt. Auf geeigneten Maschinen, insbesondere auf sogenannten Raschelmaschinen, können gleichzeitig parallel eine Vielzahl von Ketten 110 gewirkt werden.

Die Ketten 110 verlaufen dabei in Maschinenrichtung (MD) wie in Fig. 1A dargestellt. Jeweils zwei benachbarte Ketten 110 werden, wie nachstehend noch erläutert wird, jeweils durch Schussfäden 120, die zwischen zwei benachbarten Ketten 110 hin- und her verlaufen, querverbunden, wodurch der jeweilige Schussfaden 120 einen Zick-Zack-Verlauf einnimmt und das Netz gebildet wird. Üblicherweise werden durch eine Raschelmaschine und die in der Raschelmaschine vorhandenen Nadeln mehrere parallele Kettengruppen gebildet, die dann durch die Schussfäden 120 miteinander verbunden werden.

Wie in Fig. 1A gezeigt, verläuft an jeder der Ketten 110 der erste Unterstützungsfaden 130 in Maschinenrichtung (MD) entlang der zugeordneten Kette 110 und durchstößt diese an mehreren Stellen (Durchstoßpunkte 181) bzw. - bei der nicht gezeigten Variante - an sämtlichen Maschen bzw. Öffnungen der Kettenglieder.

Der Abstand u zwischen zwei benachbarten Ketten 110 kann beispielsweise 20 bis 80 mm betragen. Beispielsweise können benachbarte Ketten 110 bei einem Abstand von 25,4 mm (1 Zoll) bis 3 Zoll (76,2 mm), insbesondere auch mit 30,5 mm (1,2 Zoll) und 50,8 mm (2 Zoll) ausgebildet werden. Hier wird der Abstand als Abstand zwischen den virtuellen (gedachten) Mittellinien von jeweils zwei benachbarten Ketten 110 betrachtet. Die gesamte Breite v des Netzes bzw. Kunststoffnetzes kann 30 bis 200 cm, insbesondere 50 bis 170 cm betragen. Dabei sind noch breitere Netze ohne weiteres möglich.

Gemäß Fig. 1B enthält das Netz einen zweiten Unterstützungsfaden 140, 141, der zusätzlich zu dem ersten Unterstützungsfaden 130 ebenfalls entlang einer Kette 110 verläuft. Dabei kann, wie im linken Teil von Fig. 1B gezeigt, der zweite Unterstützungsfaden 140 parallel zum ersten Unterstützungsfaden 130 verlaufen. Genauer gesagt durchstoßen erster und zweiter Unterstützungsfaden 130, 140 beide die Kette 110 an demselben Durchstoßpunkt 181.

Wie auf der rechten Seite von Fig. 1B gezeigt, kann der zweite Unterstützungsfaden 140 auch in versetzter Weise verlaufen. Beispielsweise können die Durchstoßpunkte 182, 183 von erstem und dem zweitem Unterstützungsfaden 131, 141 nicht übereinstimmen. In diesem Zusammenhang bezeichnet der Begriff "derselbe Durchstoßpunkt 181" dieselbe Masche 187 entlang der Längsrichtung bzw. Maschinenrichtung MD.

Wenn erster und zweiter Unterstützungsfaden 130, 140 nicht parallel zueinander verlaufen, entsprechen die jeweils unterschiedlichen Durchstoßpunkte 182, 183 jeweils in Längsrichtung zueinander versetzten Maschen 187, 188 der Kette 110.

Zusätzlich zu dem ersten Unterstützungsfaden 130 und dem zweiten Unterstützungsfaden 140 können weitere Unterstützungsfäden vorgesehen sein, die ebenfalls in entsprechender Weise mit den zugehörigen Ketten 110 verbunden sind.

Bei einer nicht gezeigten Variante sind mehrere Unterstützungsfäden (z.B. 2 bis 5, vorzugsweise drei Unterstützungsfäden) an jeder Kette 110 vorgesehen und durchstoßen sämtliche Maschen bzw. Öffnungen der Kettenglieder.

Gemäß der Fig. 1A und 1B bildet der Schussfaden 120 jeweils ein Zickzackmuster zwischen zwei benachbarten Ketten 110. Das heißt, der Durchstoßpunkt 171 des Schussfadens 120 durch die Kette 110 entspricht jeweils auch dem Umkehrpunkt des Schussfadens 120.

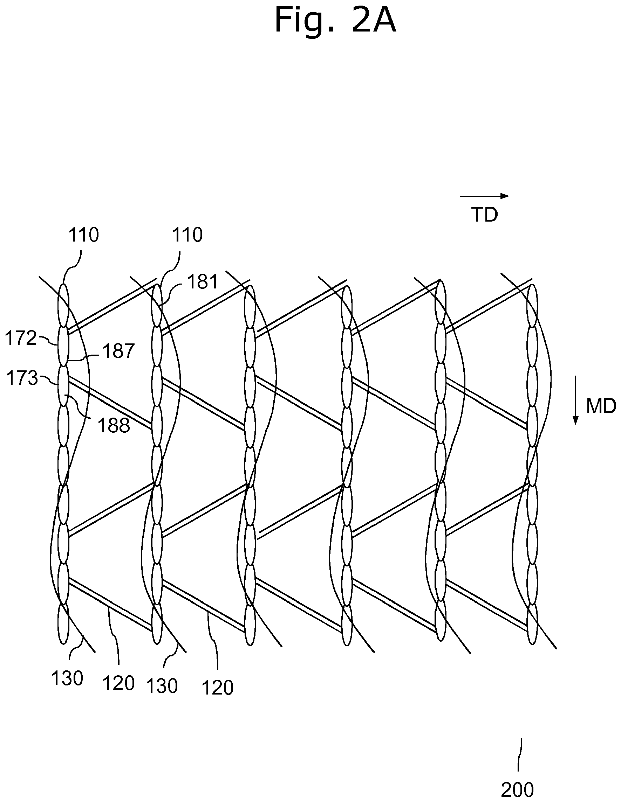

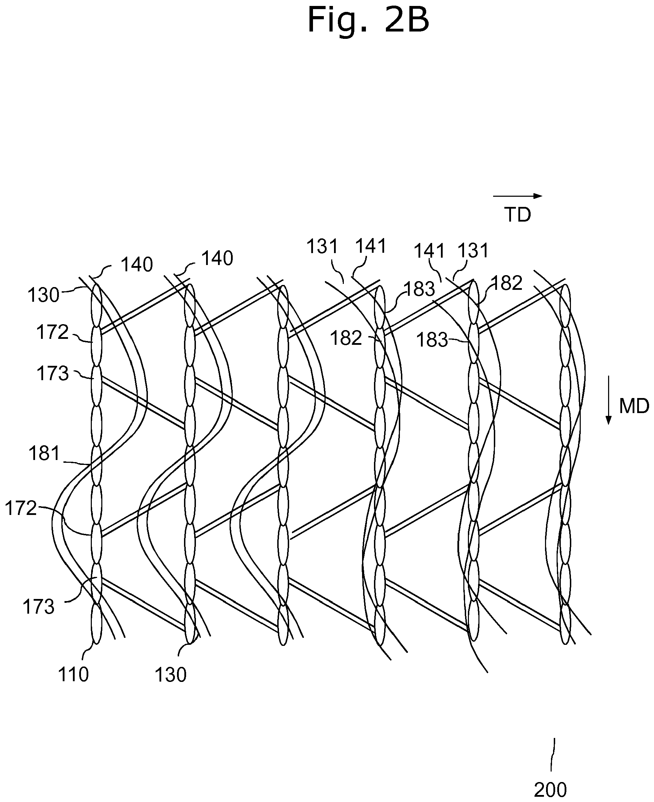

Gemäß den Fig. 2A und 2B kann der Schussfaden 120 jeweils so geführt werden, dass er nach Durchstoßen der zugehörigen Kette 110 streckenweise parallel zu der jeweiligen Kette 110 verläuft. Genauer gesagt durchstößt der Schussfaden 120 die Kette 110 an einem ersten Durchstoßpunkt 172. Daraufhin verläuft er entlang der Maschinenrichtung MD abschnittsweise parallel zur Kette 110 und durchstößt die Kette 110 an einem zweiten Durchstoßpunkt 173 und verläuft daraufhin in schräge Richtung, um anschließend eine benachbarte Kette 110 zu durchstoßen. Dadurch entsteht ein gestrecktes Zickzackmuster. Beispielsweise kann der zweite Durchstoßpunkt 173 in einer Masche 188 liegen, die gegenüber der Masche 187 des ersten Durchstoßpunkt 172 in Maschinenrichtung MD um eine oder mehrere Maschen versetzt ist.

Gemäß der Fig. 2A ist auch wieder ein Unterstützungsfaden 130 vorgesehen, der entlang der jeweiligen Kette 110 verläuft und diese an mehreren (Durchstoßpunkte 181) durchstößt. Auch hier ist es möglich, dass der Unterstützungsfaden 130 sämtliche Maschen bzw. Öffnungen der einzelnen Kettenglieder der Kette 110 durchstößt.

Gemäß der Fig. 2B kann das Netz weiterhin einen zweiten Unterstützungsfaden 140, 141 (oder auch noch weitere Unterstützungsfäden) aufweisen. Dieser kann, wie auf der linken Seite von Fig. 2B dargestellt ist, parallel zum ersten Unterstützungsfaden 130 verlaufen und an denselben Durchstoßpunkten 181 wie der erste Unterstützungsfaden 130 die Kette 110 durchstoßen.

Gemäß der in der rechten Seite von Fig. 2B gezeigten Ausgestaltung können erster Unterstützungsfaden 131 und zweiter Unterstützungsfaden 141 jeweils an unterschiedlichen Durchstoßpunkten 182, 183 die Kette 110 durchstoßen.

Die in den Figuren 1A bis 2B gezeigten Unterstützungsfäden 130, 140 sind derart in die jeweilige Kette 110 eingefädelt, dass sie im Wesentlichen gerade entlang der Kette 110 verlaufen.

Gemäß der Erfindung kann das Netz mehr als zwei Unterstützungsfäden, beispielsweise drei oder vier oder mehr Unterstützungsfäden aufweisen. Insbesondere ist es möglich, dass an jeder der Ketten 110 wenigstens ein Unterstützungsfaden vorgesehen ist. Ebenso kann aber auch nur an einem Teil der Ketten 110 ein Unterstützungsfaden angebracht sein.

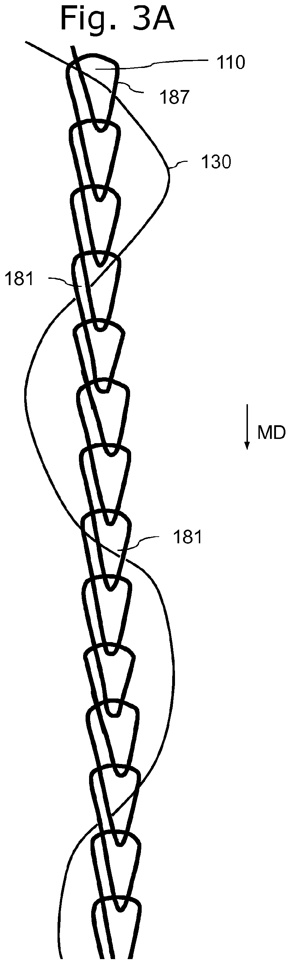

Die Figuren 3A bis 3C zeigen verschiedene Weisen, in denen der oder die Unterstützungsfäden 130, 140 mit der Kette 110, die einen Bestandteil des Netzes 200 bildet, verwoben sein können.

Wie in Fig. 3A näher veranschaulicht ist, kann der erste Unterstützungsfaden 130, wie in der Fig. 1A oder 2A, entlang der Kette 110 verlaufen und sie an mehreren Durchstoßpunkten 181, die jeweils unterschiedlichen Maschen 187, 188 entsprechen, durchstoßen. Dabei kann, wie in Fig. 3A gezeigt, der Unterstützungsfaden 130 ausschließlich in Maschinenrichtung (MD) verlaufen.

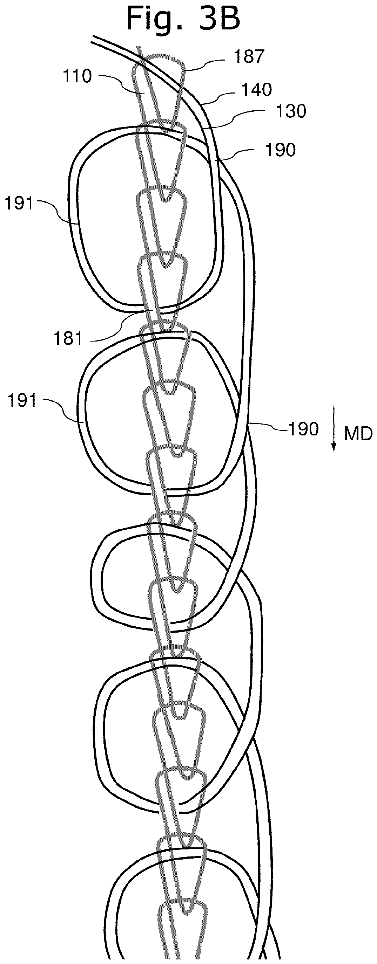

Gemäß der in Fig. 3B veranschaulichten Ausführungsform der Erfindung kann der eine Unterstützungsfaden 130 bzw. die beiden Unterstützungsfäden 130, 140 mehrere Schlingen bzw. Schleifen oder Augen 191 bilden, bei denen der entsprechende Unterstützungsfaden abschnittsweise entgegen der Längsrichtung bzw. Maschinenrichtung verläuft. Dabei können der erste und der zweite Unterstützungsfaden 130, 140 parallel zueinander verlaufen, so dass sie die Kette 110 in derselben Masche 187 durchstoßen. Alternativ können sie aber auch versetzt sein, so dass sie jeweils nicht übereinstimmende Durchstoßpunkte mit der Kette 110 aufweisen. Ebenso ist es möglich, dass nur einer der Unterstützungsfäden 130, 140 Augen 191 bzw. Schlingen oder Schleifen bildet, während der andere Unterstützungsfaden gerade verläuft, wie in Fig. 3A gezeigt.

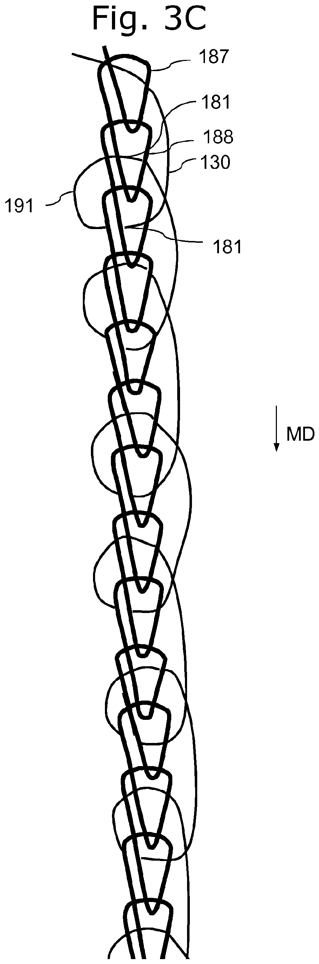

Gemäß der Fig. 3C bildet der Unterstützungsfaden 130 Schlingen bzw. Augen 191, die derart dicht beabstandet sind, dass der Unterstützungsfaden 130 jede Masche 187, 188 der Kette durchstößt. Das heißt, jede Masche 187, 188 der Kette 110 bildet einen Durchstoßpunkt 181 des Unterstützungsfadens 130. So kann die Festigkeit des Netzes weiter verbessert werden.

Aufgrund des Unterstützungsfadens ist es möglich, eine erhöhte Festigkeit des Netzes zu erzielen. Anders ausgedrückt ist es möglich, bei gleichbleibender Festigkeit des Netzes dünnere Fäden für die verschiedenen Komponenten, insbesondere für die Ketten 110 und die Schussfäden 120, zu verwenden, so dass das Gewicht des hergestellten Netzes weiter reduziert werden kann.

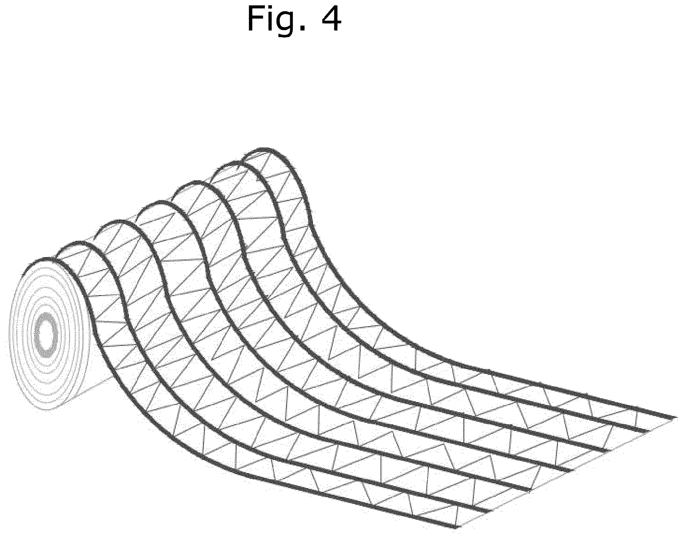

Fig. 4 zeigt ein Beispiel für ein aufgerolltes Netz. Da das Netz bei gleichbleibender Reißfestigkeit ein niedrigeres Gewicht aufweist, können mehr Meter des erfindungsgemäßen Netzes auf eine Rolle aufgerollt werden bei gleichbleibendem Gewicht der Gesamtrolle.

Bei den Ausführungsbeispielen kann eine der Ketten aus einem Kunststofffilmfaden hergestellt sein. Dabei wird ein derartiger Faden aus einem Kunststofffilm geschnitten oder extrudiert und dann mit Hilfe der Raschelmaschine verarbeitet. Durch entsprechendes Verschlingen wird aus einem Faden eine Kette gewirkt bzw. gestrickt. Dabei ist es auch möglich eine einzelne Kette nicht nur aus einem sondern aus zwei oder mehr Fäden zu stricken. Der Kunststofffilm eines Kunststofffilm-Fadens kann eine Dicke von 100 *µ*m oder weniger, insbesondere von 80 *µ*m oder weniger, insbesondere von 60 *µ*m oder weniger, insbesondere von 40 *µ*m oder weniger aufweisen. Die Breite des Unterstützungsfadens kann beispielsweise 0,5 bis 4 mm betragen. Der Unterstützungsfaden sowie der Schussfaden können in analoger Weise wie der Faden zur Herstellung wenigstens einer der Ketten aus einem Kunststofffilm geschnitten oder extrudiert werden.

Das erfindungsgemäße Netz kann aufgrund seiner geringen Masse und seiner hohen Festigkeit zum Verpacken loser Güter wie beispielsweise Heu, Stroh, Gemüse, rohe Baumwolle oder sonstiger Pflanzenteile verwendet werden.

## Patentansprüche

1. Raschelnetz (200) mit:
- mehreren sich in Längsrichtung parallel zueinander erstreckenden Ketten (110) aus aneinander gereihten Maschen (187, 188),
- mehreren Schussfäden (120), von denen jeweils einer zwischen zwei benachbarten Ketten (110) hin- und herläuft und die benachbarten Ketten (110) miteinander verbindet, und mit
- einem ersten Unterstützungsfaden (130, 131), der entlang den Maschen einer Kette (110) verläuft und diese an mehreren Stellen (181) durchstößt, **gekennzeichnet durch**
- einen zweiten Unterstützungsfaden (140, 141), der entlang der Kette (110) verläuft,
wobei
- der zweite Unterstützungsfaden (140) sich entlang der Kette (110) in Längsrichtung erstreckt, und wobei
- der zweite Unterstützungsfaden (140) abschnittsweise Augen (191) bildet, in denen er entgegen der Längsrichtung verläuft.

2. Raschelnetz (200) nach Anspruch 1, wobei
- der erste Unterstützungsfaden (130, 131) sich entlang der Kette (110) in Längsrichtung erstreckt, und wobei
- der erste Unterstützungsfaden (130, 131) abschnittsweise Augen (191) bildet, in denen er entgegen der Längsrichtung verläuft.

3. Raschelnetz (200) nach Anspruch 1 oder 2, wobei der zweite Unterstützungsfaden (140) zumindest teilweise parallel zum ersten Unterstützungsfaden (130) verläuft.

4. Raschelnetz (200) nach einem der vorhergehenden Ansprüche, wobei der erste Unterstützungsfaden (130, 131) jede Masche (187, 188) der Kette (110) durchstößt.

5. Raschelnetz (200) nach einem der vorhergehenden Ansprüche, wobei
- - die Unterstützungsfäden derart in die Kette (110) eingefädelt sind, dass sie die Kette (110) an sämtlichen Kettengliedern durchstoßen.

6. Raschelnetz (200) nach einem der vorhergehenden Ansprüche, wobei an mehreren der Ketten (110) jeweils ein erster Unterstützungsfaden (130) vorgesehen ist, der entlang der zugeordneten Kette (110) verläuft und diese an mehreren Maschen (181) durchstößt.

7. Raschelnetz (200) nach einem der vorhergehenden Ansprüche, wobei der Unterstützungsfaden (130, 131, 140, 141) ein Kunststofffilmfaden ist.

8. Raschelnetz (200) nach einem der vorhergehenden Ansprüche, wobei die Dicke des Unterstützungsfadens (130, 131, 140, 141) 0,5 mm bis 4 mm beträgt.

9. Raschelnetz (200) nach einem der vorhergehenden Ansprüche, wobei der Schussfaden (120) ein Zick-Zackmuster ausbildet.

10. Raschelnetz (200) nach einem der Ansprüche 1 bis 8, wobei der Schussfaden (120) nach Durchstoßen einer zugehörigen Kette (110) streckenweise parallel zu dieser Kette (110) verläuft.

11. Verwendung des Raschelnetzes (200) nach einem der vorhergehenden Ansprüche zum Verpacken loser Güter.

## Claims

1. Raschel net (200) with
- a plurality of chains (110) extending in the longitudinal direction in parallel to each other made of meshes (187, 188) arranged in rows,
- a plurality of weft threads (120) of which in each case one runs back and forth between two adjacent chains (110) and connects the adjacent chains (110) to each other, and with
- a first support thread (130, 131) which runs along the meshes of a chain (110) and penetrates these at several points (181), **characterised by**
- a second support thread (140, 141) which runs along the chain (110), wherein
- the second support thread (140) extends along the chain (110) in the longitudinal direction and wherein
- the second support tread (140) forms eyelets (191) in sections in which it runs contrary to the longitudinal direction.

2. Raschel net (200) according to claim 1 wherein
- the first support thread (130, 131) extends along the chain (110) in the longitudinal direction, and wherein
- the first support thread (130, 131) forms eyelets (191) in sections in which it runs contrary to the longitudinal direction.

3. Raschel net (200) according to claim 1 or 2 wherein the second support thread (140) runs at least partially in parallel to the first support thread (130).

4. Raschel net (200) according to any one of the preceding claims wherein the first support thread (130, 131) penetrates every mesh (187, 188) of the chain (110).

5. Raschel net (200) according to any one of the preceding claims, wherein
- the support threads are threaded into the chain (110) in such a way that they penetrate the chain (110) at all chain links.

6. Raschel net (200) according to any one of the preceding claims wherein on each of several of the chains (110) a first support thread (130) is provided, which runs along the assigned chain (110) and penetrates it as several meshes (181).

7. Raschel net (200) according to any one of the preceding claims wherein the support thread (130, 131, 140, 141) is a synthetic film chain.

8. Raschel net (200) according to any one of the preceding claims wherein the thickness of the support thread (130, 131, 140, 141) is 0.5 mm to 4 mm.

9. Raschel net (200) according to any one of the preceding claims wherein the weft thread (120) forms a zig-zag pattern.

10. Raschel net (200) according to any one of claims 1 to 8 wherein after penetrating an associated chain (110) the weft thread (120) runs parallel to this chain (110) in sections.

11. Use of the raschel net (200) in accordance with any one of the preceding claims to pack loose goods.

## Revendications

1. Filet raschel (200) pourvu de :
- plusieurs chaînes (110) s'étendant à la parallèle les unes des autres, en direction longitudinale, constituées de mailles (187, 188) juxtaposées,
- plusieurs fils de trame (120), dont respectivement l'un va et vient entre deux chaînes (110) voisines et relie ensemble les chaînes (110) voisines, et pourvu
- d'un premier fil de soutien (130, 131), qui s'écoule le long des mailles d'une chaîne (110) et traverse ces dernières en plusieurs endroits (181), **caractérisé par**
- un deuxième fil de soutien (140, 141), qui s'écoule le long de la chaîne (110),
- le deuxième fil de soutien (140) s'étendant le long de la chaîne (110) en direction longitudinale, et
- le deuxième fil de soutien (140) formant par sections des œillets (191) dans lesquels il s'écoule à l'encontre de la direction longitudinale.

2. Filet raschel (200) selon la revendication 1,
- le premier fil de soutien (130, 131) s'étendant le long de la chaîne (110) en direction longitudinale, et
- le premier fil de soutien (130, 131) formant par sections des œillets (191) dans lesquels il s'écoule à l'encontre de la direction longitudinale.

3. Filet raschel (200) selon la revendication 1 ou 2, le deuxième fil de soutien (140) s'écoulant au moins en partie à la parallèle du premier fil de soutien (130).

4. Filet raschel (200) selon l'une quelconque des revendications précédentes, le premier fil de soutien (130, 131) transperçant chaque maille (187, 188) de la chaîne (110).

5. Filet raschel (200) selon l'une quelconque des revendications précédentes,
- les fils de soutien étant enfilés dans la chaîne (110), de sorte à transpercer la chaîne (110) sur tous les maillons de la chaîne.

6. Filet raschel (200) selon l'une quelconque des revendications précédentes, sur plusieurs des chaînes (110) étant prévu respectivement un premier fil de soutien (130), qui s'écoule le long de la chaîne (110) associée et transperce celle-ci sur plusieurs mailles (181).

7. Filet raschel (200) selon l'une quelconque des revendications précédentes, le fil de soutien (130, 131, 140, 141) étant un film en matière plastique.

8. Filet raschel (200) selon l'une quelconque des revendications précédentes, l'épaisseur du fil de soutien (130, 131, 140, 141) s'élevant à de 0,5 mm à 4 mm.

9. Filet raschel (200) selon l'une quelconque des revendications précédentes, le fil de trame (120) formant un motif en zigzag.

10. Filet raschel (200) selon l'une quelconque des revendications 1 à 8, après avoir transpercé une chaîne (110) correspondante, le fil de trame (120) s'écoulant ici et là à la parallèle de ladite chaîne (110).

11. Utilisation du filet raschel (200) selon l'une quelconque des revendications précédentes pour emballer des produits en vrac.
